# EUROPEAN PATENT APPLICATION

(11) **EP 4 390 230 A1**
(43) Date of publication of application: **26.06.2024**
(21) Application number: 22880667.5
(22) Date of filing: 06.09.2022
(51) Int. Cl.: F24C 7/04, H05B 6/12

(54) **INFORMATION PROCESSING DEVICE, INFORMATION PROCESSING METHOD, AND PROGRAM**

(30) Priority: 13.10.2021 JP 2021168046
(71) Applicant: Sony Group Corporation, Tokyo 108-0075 (JP)
(72) Inventor: MURAKAMI, Tadayoshi, Tokyo 108-0075 (JP); SHIGA, Daizo, Tokyo 108-0075 (JP); INOUE, Junki, Tokyo 108-0075 (JP); SHIMIZU, Yuki, Tokyo 108-0075 (JP)
(74) Representative: D Young & Co LLP
(86) International application number: PCT/JP2022/033350
(87) International publication number: WO 2023/062971

(57) **Abstract**

An information processing device (IP) includes a processor (PR). The processor (PR) presents reproduction data indicating a cooking profile of a dish during cooking to a cook (US) in real time in a format that can be compared with reference data.

## Description

### Field

The present invention relates to an information processing device, an information processing method, and a program.

### Background

There is known a cooking assistance system that assists cooking based on sensor information. The known cooking assistance system automated control of the heating temperature and the heating time based on the sensor information acquired by cookware.

### Citation List

### Patent Literature

Patent Literature 1: JP 2016-051526 A
Patent Literature 2: JP 2010-192274 A
Patent Literature 3: JP 2005-539250 A

### Summary

### Technical Problem

The known cooking assistance aims at automation of cooking work. Therefore, this does not include assistance for prompting a cook to perform an appropriate cooking action according to the cooking situation. On the other hand, recently, with the spread of the Internet community such as cookpad (registered trademark), there has been established an environment in which a cook enjoys cooking on their own. The cook can reproduce a dish prepared by another person by using recipe information posted on a community site.

The recipe information includes information such as heating power (heating temperature) and heating time. However, even when these conditions are faithfully reproduced, it is difficult to reproduce the finish of cooking. This is considered to be caused by reasons such as the amount, characteristics, and unevenness in cutting and mixing of the ingredients. Using automated heating control under uniform conditions, with a dedicated kitchen utensil, a pre-cut food kit, and the like, the finish of cooking would be better in accuracy. However, this method is close to a food factory approach, with less enjoyment of cooking.

In view of this, the present disclosure proposes an information processing device, an information processing method, and a program capable of enhancing the reproduction degree of finish of the dish.

### Solution to Problem

According to the present disclosure, an information processing device is provided that comprises a processor that presents reproduction data indicating a cooking profile of a dish during cooking to a cook in real time in a format that can be compared with reference data. According to the present disclosure, an information processing method in which an information process of the information processing device is executed by a computer, and a program for causing the computer to execute the information process of the information processing device are provided.

### Brief Description of Drawings

FIG. 1 is a diagram illustrating an outline of a cooking assistance system.
FIG. 2 is a functional block diagram of a cooking assistance system.
FIG. 3 is a diagram illustrating a processing flow in a recording mode.
FIG. 4 is a diagram illustrating a presentation example of assistance information using a time series graph.
FIG. 5 is a diagram illustrating a presentation example of assistance information using a time series graph.
FIG. 6 is a diagram illustrating a presentation example of assistance information using a time series graph.
FIG. 7 is a diagram illustrating a presentation example of assistance information using a histogram.
FIG. 8 is a diagram illustrating a presentation example of assistance information using a histogram.
FIG. 9 is a diagram illustrating a presentation example of assistance information using a heat map.
FIG. 10 is a diagram illustrating an example of visualizing a target state of a cooking object.
FIG. 11 is a diagram illustrating an example of visualizing a target state of a cooking object.
FIG. 12 is a diagram illustrating recognition processing of a cooking step.
FIG. 13 is a diagram illustrating an identification example of the cooking step.
FIG. 14 is a diagram illustrating another identification example of the cooking step.
FIG. 15 is a diagram illustrating a presentation example of assistance information by music expression.
FIG. 16 is a diagram illustrating an example of a hardware configuration of the information processing device.

### Description of Embodiments

Embodiments of the present disclosure will be described below in detail with reference to the drawings. In each of the following embodiments, the same parts are denoted by the same reference symbols, and a repetitive description thereof will be omitted.

Note that the description will be given in the following order.
[1. Configuration of cooking assistance system]
[2. Processing flow]
[2-1. Recording mode]
[2-2. Reproduction mode]
[3. Method of presenting information on display]
[3-1. Time series graph]
[3-2. Histogram]
[3-3. Heat map]
[3-4. Target state of cooking object]
[4. Cooking step recognition]
[4-1. Cooking step identification example 1]
[4-2. Cooking step identification example 2]
[5. Information presentation by music expression]
[6. Hardware configuration example]
[7. Effects]

### [1. Configuration of cooking assistance system]

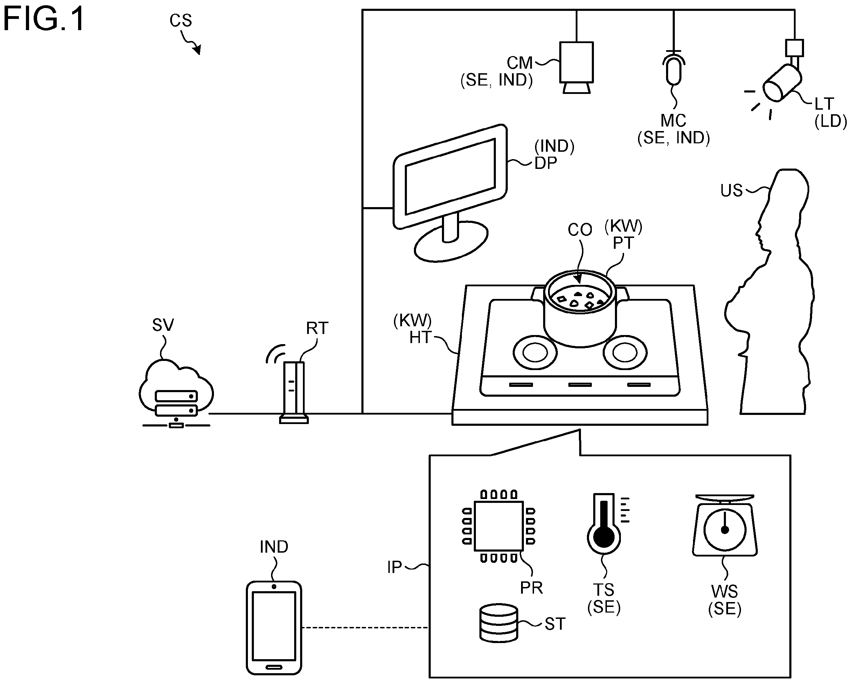

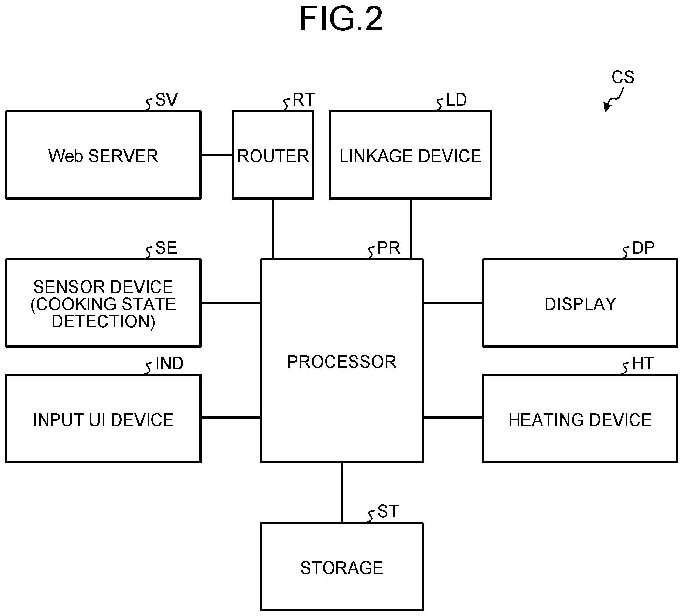

FIG. 1 is a diagram illustrating an outline of a cooking assistance system CS. FIG. 2 is a functional block diagram of the cooking assistance system CS.

The cooking assistance system CS is a type of smart kitchen appliances that assist cooking work by using a linkage between a cooking device having a built-in sensor and an information terminal. For example, the cooking assistance system CS assists cooking using a cookware KW. In the example of FIG. 1, an induction heating (IH) heater HT and a pot PT are used as the cookware KW.

The cooking assistance system CS generates cooking data for each dish using sensor data acquired from a sensor device SE. The cooking data is data indicating a profile of cooking performed by a cook US from the start to the end of the cooking. The cooking data includes time series information (TTW information) regarding the heating temperature, the heating time, and the weight of a cooking object CO, for example. Information related to the heating power of the cookware KW is also included in the cooking data in association with the heating temperature. The cooking data can also include a video (cooking video) that has captured a cooking process by a camera sensor CM.

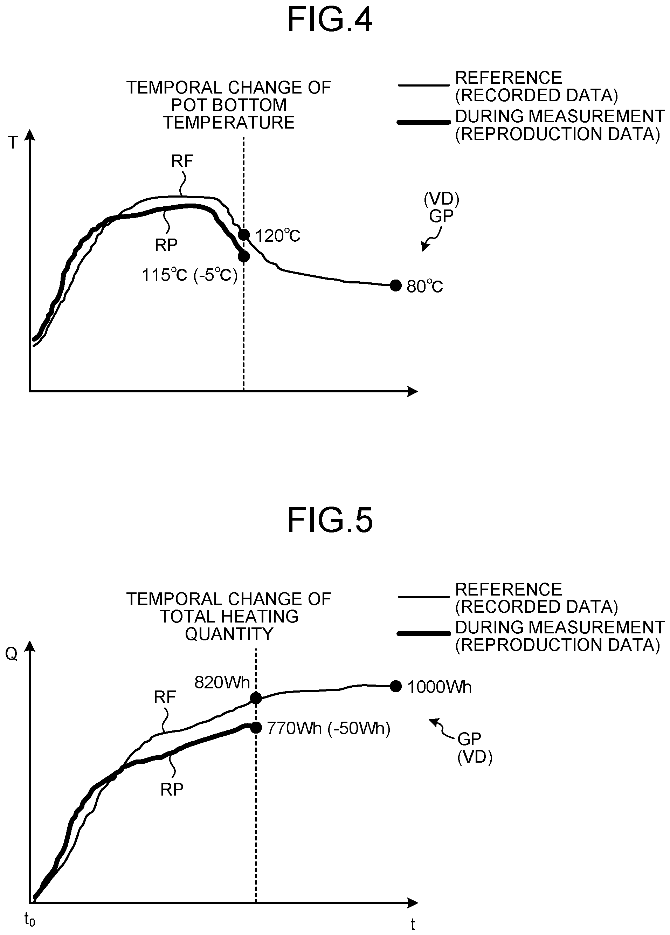

A web server SV stores a large number of recorded cooking data items. The cook at the time of recording may be the cook US themselves or another cook. The cooking assistance system CS acquires the recorded cooking data as reference data RF (refer to FIG. 4) from the web server SV. The cook US performs cooking with reference to the reference data RF. This makes it possible to reproduce the recorded dish.

The cooking assistance system CS generates reproduction data RP (refer to FIG. 4) based on the cooking profile of the dish during cooking. The cooking profile means time series information representing an operation history of the cooking object CO in the cooking process and a state change of the cooking object CO. The operation history of the kitchen utensil such as the IH heater HT or the pot PT is also included in the cooking profile as an indirect operation history of the cooking object CO. In addition, a change in the state of a kitchen utensil such as an IH heater HT or a pot PT also affects the state change of the cooking object CO, and thus is entailed in the cooking profile.

The reproduction data RP is cooking data generated using sensor data obtained when the cook US performs cooking while referring to the reference data RF. The cooking assistance system CS constantly presents the reproduction data RP of cooking in progress to the cook US in a format that can be compared with the reference data RF during a period of cooking by the cook US. This prompts the cook US to take an appropriate cooking action according to the cooking situation.

The cooking assistance system CS includes, for example, an IH heater HT, a pot PT, a display DP, a camera sensor CM, a microphone MC, a lighting tool LT, a web server SV, a network router RT, an input UI device IND, and an information processing device IP.

Camera sensor CM captures an image of the cooking object CO in the pot PT. The microphone MC detects a sound during cooking. The detected sound includes a sound generated by cooking and the voice of the cook US. The display DP performs video and audio presentation of various pieces of information (assistance information) for cooking assistance based on the cooking data. The input user interface (UI) device IND supplies user input information input by the cook US to the information processing device IP.

The input UI device IND includes all of the user interfaces with the cook US corresponding to the input device. Applicable examples of the input UI device IND include an information terminal such as a smartphone, a touch panel incorporated in the display DP, or the like. Furthermore, voice input by the microphone MC, gesture input by the camera sensor CM, and the like can also be included in the input information using the input UI device IND. Accordingly, the microphone MC and the camera sensor CM function as the input UI device IND.

The display DP includes all output UI devices that present information to the cook US. Applicable examples of the display DP include a wearable display such as augmented reality (AR) glasses in addition to a stationary display such as a liquid crystal monitor or a projector. The display DP may also include a non-visual information presentation device such as a speaker or a haptics device.

The information processing device IP integrally controls the entire cooking assistance system CS based on various types of information detected by the cooking assistance system CS. The information processing device IP includes a processor PR, a temperature sensor TS, a weight sensor WS, and storage ST, for example. All the components of the information processing device IP may be built in the IH heater HT. Alternatively, a part or all of the information processing device IP may be mounted on an external device that communicates with the IH heater HT.

The temperature sensor TS measures a temperature of the pot PT or the cooking object CO in the pot PT. The weight sensor WS measures a weight of the cooking object CO in the pot PT. An example of the temperature sensor TS is a radiation thermometer capable of performing highly responsive contactless measurement of temperature. Examples of the weight sensor WS include a load cell. In the example of FIG. 1, the temperature sensor TS is incorporated in the IH heater HT being a heating controller. However, temperature sensor TS may be incorporated in the pot PT being a heating medium.

The temperature sensor TS and the weight sensor WS, together with the camera sensor CM and the microphone MC, constitute a sensor device SE that detects various types of information in the cooking assistance system CS. The state of the cooking object CO is detected based on the sensor data acquired by the sensor device SE. The sensor device SE can include other sensors capable of detecting the state of the cooking object CO in addition to the above-described sensors. The sensor data acquired by the sensor device SE is supplied to the information processing device IP in real time.

The processor PR generates cooking data based on the sensor data acquired from the sensor device SE. The processor PR generates assistance information using the cooking data and supplies the generated assistance information to the display DP. The assistance information includes visual or auditory information that allows the cook US to recognize a deviation between the reproduction data RP and the reference data RF. The processor PR presents the reproduction data RP indicating the cooking profile of the dish during cooking to the cook US in real time in a format that can be compared with the reference data RF.

The processor PR adjusts the lighting tool LT in order to control the image capturing condition of the camera sensor CM. The lighting tool LT constitutes a part of a linkage device LD that controls a cooking environment. The linkage device LD can include other devices such as an air conditioner. The processor PR controls the operation of the linkage device LD based on the sensor data.

The processor PR communicates with an external device, a web server SV, or the like via the network router RT. The processor PR controls the operation of each device in the cooking assistance system CS based on the external information acquired via communication, the sensor data, and user input information.

### [2. Processing flow]

Information processing of the cooking assistance system CS is roughly classified into two types. One is processing of recording cooking alone without presenting assistance information (recording mode). The other is processing of recording cooking while presenting assistance information to the cook US (reproduction mode). The flow of processing in each mode will be described below.

### [2-1. Recording mode]

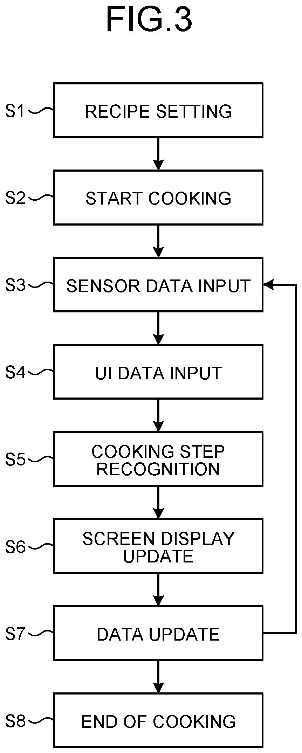

FIG. 3 is a diagram illustrating a processing flow in the recording mode.

### <Step S1: Recipe setting>

The cook US sets recipe information to be a cooking condition via the input UI device IND. For example, the recipe information includes some or all of the following items.
(i) Type and name of dish
(ii) Types, amounts, cutting method and mixing method of ingredients to be used
(iii) Cookware to be used
(iv) Cooking step (timing and quantity of ingredients to be put, heating power setting, and heating time)
(v) Finished quantity

For example, the cook US selects a favorite recipe from a menu in an application displayed on the input UI device IND, whereby recipe information is automatically set. The cook US can perform detailed setting of individual information by the application.

### <Step S2: Start cooking>

The processor PR detects the start of cooking based on some trigger event from the operation of the cook US. Having detected the start of cooking, the processor PR performs initialization processing. The initialization processing is registered in the web server SV in association with the recipe information. In the following flow, steps of the sensor data input (Step S3) to the data recording (Step S7) make a processing loop to be repeatedly executed in real time. Execution timings of processing, a method of parallel processing, and the like vary depending on a specific processing system.

### <Step S3: Sensor data input>

The processor PR receives sensor data from the sensor device SE that detects a cooking state. Typically, the frame rates of the sensors vary and not necessarily synchronized to each other. All the received data is held with a time stamp based on a clock device managed by the processor PR. Although a specific usage of the clock device is not limited, time management of time stamps of all sensor data is performed so as to be able to be compared with each other.

### <Step S4: UI data input>

The processor receives user input information from the input UI device IND.

### <Step S5: Cooking step recognition>

The processor PR recognizes a current cooking step based on the recipe information and the input data (sensor data, user input information) obtained up to the moment. That is, the processor PR specifies which stage of the cooking process is being executed. The real-time execution of this processing is optional in the recording mode. Recorded cooking data can be analyzed and processed offline after cooking is finished.

### <Step S6: Screen display update>

The processor PR presents information related to the current cooking state on the display DP based on the information processed in the previous stage. A specific presentation method will be described below.

### <Step S7: Data recording>

The processor PR records all data required in the reproduction mode in an appropriate format and generates cooking data. The storage ST being a nonvolatile storage device is assumed as a normal recording destination, but the recording destination is not limited thereto. The recording destination may be implemented by using any storage device accessible by the processor PR. The data transfer is not necessarily performed as recording and data may be transmitted as streaming to an external device.

### <Step S8: End of cooking>

The processor PR detects the end of cooking based on some trigger event from the operation of the cook US. Having detected the end of cooking, the processor PR performs end processing. The end processing is registered in the web server SV in association with the recipe information.

### [2-2. Reproduction mode]

Hereinafter, details of each processing in the reproduction mode will be described focusing on the difference in operation with respect to the recording mode. Since Steps S2, S3, S4, S7, and S8 are the same as those in the recording mode, the description thereof will be omitted.

### <Step S1: Recipe setting>

The cook US designates recorded cooking data (reference data RF) to be a reference via the input UI device IND. The reference data RF indicates cooking processes to be reproduced by the cook US. With the reference data RF as a target, the cook US performs cooking so as to bring data (reproduction data RP) obtained by cooking performed by the cook themselves close to the reference data RF.

The processor PR reads the designated reference data RF. The processor PR sets the recipe information included in the reference data RF as a cooking condition. The cook US may start cooking under the same condition as it is, or change the condition via the input UI device IND similarly to the recording mode.

### <Step S5: Cooking step recognition>

The processor PR recognizes a current cooking step based on the recipe information and the input data (sensor data, user input information) obtained up to the moment. That is, the processor PR specifies which stage of the cooking process is being executed. This processing is essential in the reproduction mode. In particular, it is important to specify the start time and the end time of each cooking step with high accuracy based on the cooking start time. A specific method of recognizing the cooking step will be described below.

### <Step S6: Screen display update>

In the reproduction mode, the processor PR presents information related to the current cooking state on the display DP in a format that can be compared with the reference data RF. A specific presentation method will be described below.

### [3. Method of presenting information on display]

Hereinafter, a specific method of information presentation in the screen display update in Step S6 will be described as an example. For example, the processor PR presents the reproduction data RP and the reference data RF as visualized data VD (refer to FIG. 4) that can be visually compared by the cook US. In the visualized data VD, a difference (deviation) of the reproduction data RP with respect to the reference data RF is expressed in real time. The processor PR expresses the deviation between the reproduction data RP and the reference data RF by a time series graph, a histogram, or a heat map, for example.

### [3-1. Time series graph]

FIGS. 4 to 6 are diagrams illustrating examples of presentation of assistance information using a time series graph GP.

In this example, the sensor data is directly visualized as the time series graph GP. The horizontal axis represents time, while the vertical axis represents values of time series data, such as heating power, temperature, and weight. FIG. 4 schematically illustrates, as the simplest example, a graph indicating a temporal change in a pot bottom temperature measured by the temperature sensor TS. The horizontal axis represents time t, and the vertical axis represents a pot bottom temperature T. An origin to of the time axis is the start time of each cooking step.

The reference data RF and the reproduction data RP are displayed with the origin (start time of the cooking step) aligned for each cooking step. With this display, visualization is performed so as to be able to perform comparison of temperature values with the origin of the time axis aligned for each cooking step. The dashed line is an indicator indicating the current time. The current temperature difference with respect to the reference data RF is displayed as "-5°C". As time elapses, the graph is updated in real time, and the line indicating the reproduction data RP extends to the right. While viewing this graph, the cook US can control cooking so as to reduce the temperature difference with respect to the target reference data RF.

The time series data on the vertical axis may be any index value that can be calculated from the sensor data. For example, FIG. 5 illustrates an example of a graph representing a total heating quantity Q from start time t0 of the cooking step to the current time t, as time series data. The total heating quantity Q is simply estimated by monitoring the power consumption of the IH heater HT. For the cook US, reproducing the total heating quantity is considered to be able to be relatively easily controlled rather than constantly reproducing the temperature of the pot bottom.

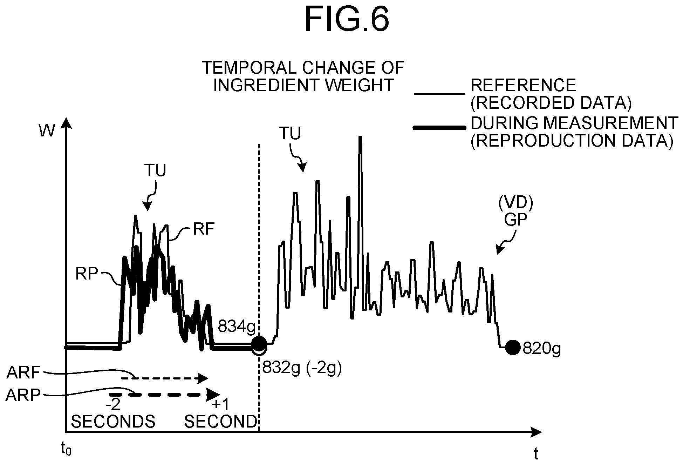

FIG. 6 illustrates an example of a graph setting the vertical axis as an ingredient weight W in the pot PT. The cook US can grasp a current weight difference with respect to the reference data RF. In addition, FIG. 6 also illustrates a state in which fluctuation TU of the weight value is observed at the timing of mixing the ingredients. In the time series graph GP, a fluctuation period ARF in the reference data RF and a fluctuation period ARP in the reproduction data RP are illustrated by arrows. By visualizing the timing of mixing in the reference data RF and the reproduction data RP and presenting a deviation in timing with respect to the reference data RF, the cook US can reproduce the timing of mixing. The fluctuation TU of the weight value reflects the mixing force, and the cook US can reproduce the strength of the mixing by adjusting the force so as to reproduce the amplitude of the values.

Note that the display method examples in FIGS. 4 to 6 assume the reproduction mode. The recording mode displays no reference data RF, and only displays the reproduction data RP related to the dish during cooking. The start time t0 is different between the recording mode and the reproduction mode in some cases. For example, in the reproduction mode in which cooking step recognition is performed in real time at the time of recording, the start time of each cooking step is indicated as t0. In contrast, in the recording mode not including the comparison with the reference data RF, the start time t0 can be flexibly set.

### [3-2. Histogram]

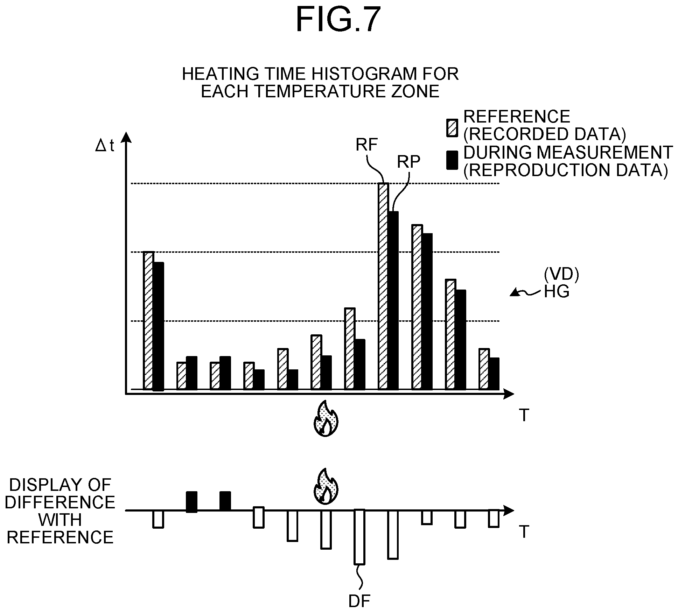

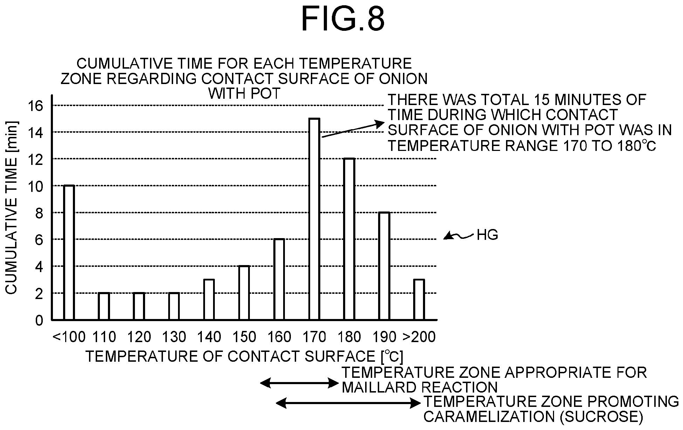

FIGS. 7 and 8 are diagrams illustrating presentation examples of assistance information using a histogram HG.

Original sensor data is time series data, but the information to be presented is not necessarily to be in time series representation. FIG. 7 is an example in which the heating time (cumulative heating time) for each temperature zone is presented by the histogram HG. The horizontal axis represents a heating temperature (temperature zone) T, and the vertical axis represents a heating time Δt. Each bar graph of the histogram HG indicates the length of the heating performed in the corresponding temperature zone. The flame mark in FIG. 7 is a temperature zone currently detected by the temperature sensor TS, and the graph is updated in real time with the lapse of time. As illustrated in the lower part of the drawing, the difference of the current reproduction data RP with respect to the reference data RF can also be displayed.

The cook US can control heating so as to be close to the reference data RF as much as possible while viewing these graphs. For example, as illustrated in FIG. 8, a temperature zone that appropriately promotes a Maillard reaction deeply associated with an umami component in cooking is considered to be around 160°C to 180°C. Therefore, it is important to accurately control the heating time in this temperature zone in order to reproduce the finish. For this purpose, the histogram HG as illustrated in FIG. 7 is more effective as a visualization format for assisting the cook US than the time series graph GP.

### [3-3. Heat map]

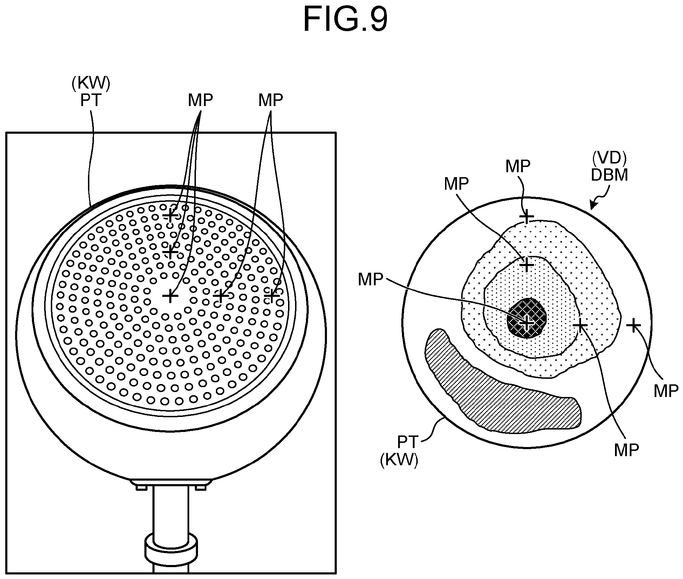

FIG. 9 is a diagram illustrating a presentation example of assistance information using a heat map DBM.

The temperature of pot PT during heating is not uniform, and has some unevenness. In order to express the temperature distribution of the pot bottom, it is effective to use the heat map DBM which expresses a difference in temperature by a difference in color or the like. It is allowable to express not only the temperature at a certain time point but also the distribution of the cumulative calorific value of the pot bottom in a certain time range calculated from the time series data of the temperature. Temperature distributions of the reproduction data RP and the reference data RF at corresponding times may be simply displayed side by side. Moreover, as a slightly advanced example, FIG. 9 visualizes a cumulative temperature difference of the reproduction data RP during measurement with respect to the reference data RF.

The processor PR calculates the sum (time average) of the temperature differences between the reference data RF and the reproduction data RP at each point of the pot bottom for the duration from the start time t0 of the cooking step to the current time t. The processor PR displays information of the calculated temperature difference as the heat map DBM. Since it is known from the heat map DBM which part of the pot bottom tends to have a higher (lower) temperature than the reference data RF, the cook US can adjust the heating power, the position of the pot PT, the arrangement of the ingredients in the pot PT, the way of mixing the ingredients, and the like so as to approach the state same as the reference data RF.

Incidentally, generating the heat map DBM requires temperature information of the entire pot bottom to be a target. However, only a part of measurement points MP on the pot bottom is directly measured by the temperature sensor TS in typical cases. In this case, it is necessary to estimate the temperature distribution of the entire pot bottom from the temperature measurement value of the measurement point MP. The temperature distribution of the entire pot bottom can be calculated by heat transfer simulation using a finite element method or the like that uses the amount of heat applied from the cooking stove to the pot according to the heating power setting, and the physical structures and physical property values of the cooking stove and the pot, as known information.

### [3-4. Target state of cooking object]

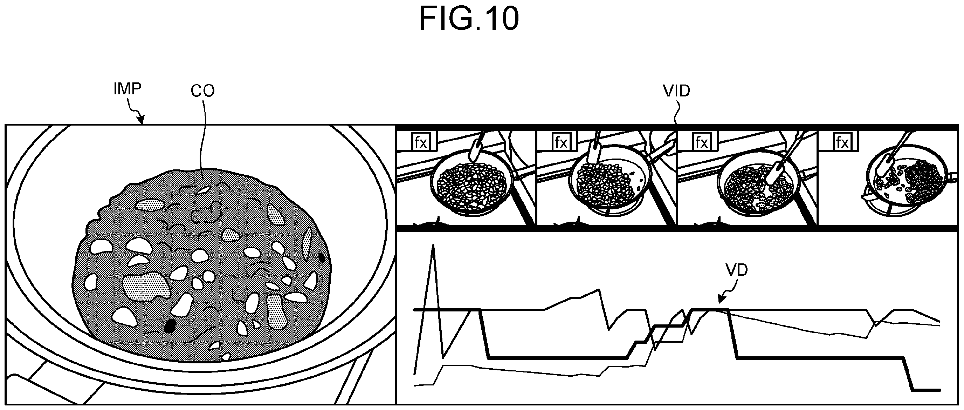

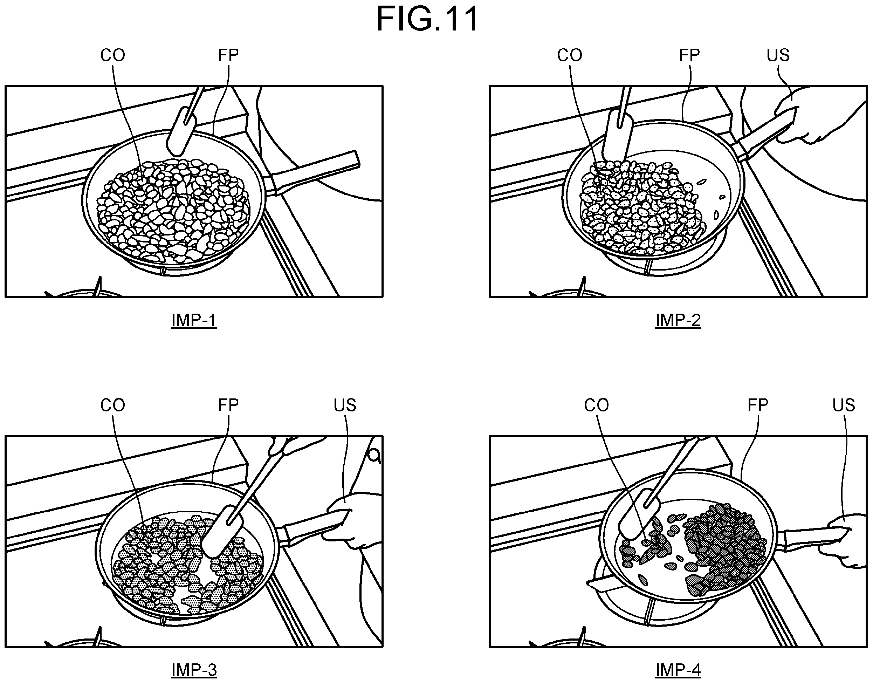

FIGS. 10 and 11 are diagrams illustrating a visualization example of the target state of the cooking object CO.

The start/end time of each cooking step is specified for the reference data RF by cooking step recognition to be described below. Therefore, it is possible to present the target state of the cooking step from the sensor data near the end time of the cooking step. In particular, in a case where the camera sensor CM that captures an image of the cooking object CO is provided as the sensor device SE, it is effective to present the image for each cooking step of the cooking object CO to the cook US as a target image.

For example, in the example of FIG. 10, the reference data RF includes a cooking video VID obtained by capturing the state in the pot with the camera sensor CM through the cooking process. The processor PR extracts an image at the end of the cooking step from the cooking video VID as a reference image IMP (target image) to the cook US. The end of the cooking step represents a period having a predetermined time width centered on the end time of the cooking step. (that is, a period near the end time). The processor PR extracts the reference image IMP (state as an external view) of the cooking object CO near the end time of the cooking step regarding the cooking step currently in progress, and presents the extracted reference image IMP to the cook US as a target image of the cooking step.

For example, in the case of sauteing minced onion, the degree of coloring of the onion is used as an indicator of determining the finish. FIG. 11 illustrates image examples IMP-1 to IMP-4 captured by the camera sensor CM in the case of sauteing the onion until caramelized. In FIG. 11, cooking states at different times are distinguished by a number appended to "IMP". The larger the number, the longer the lapse of time. By presenting the image example IMP-4 close to the end of the step as the reference image IMP to be a target image, the cook US can visually confirm the reproduction degree of the reference data RF.

The information presented as the target state is not limited to the image of the cooking object CO. Any information obtained from the sensor data can be extracted from any time and presented as information indicating the target state. For example, the examples of FIGS. 4 to 6 display target values of a temperature T and a weight W extracted from the reference data RR.

### [4. Cooking step recognition]

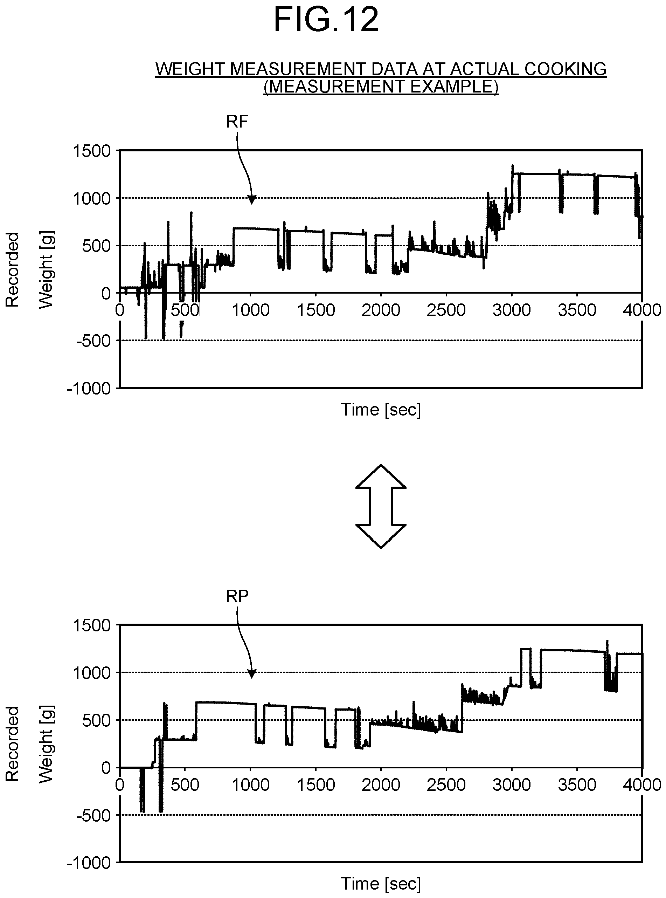

FIG. 12 is a diagram illustrating recognition processing of the cooking step (cooking step recognition).

The cooking step recognition is processing of recognizing start/end timing of each step constituting a cooking process for each sample in order to perform data comparison on a time axis between different samples. Here, the "different samples" are time series data groups recorded in different cooking events based on the same recipe, and are represented by the reference data RF and the reproduction data RP.

FIG. 12 illustrates an example of weight measurement data in actual cooking. The upper diagram indicates the reference data RF, and the lower diagram indicates the reproduction data RP. The cook US performs cooking with reference to the reference data RF, in which it is difficult to have the working time completely match the reference data RF. When there is lag in the working time, the reproduction data RP and the reference data RF cannot be associated with each other, making it difficult to determine which time reference data RF should be referred to in the cooking.

Achieving effective comparison of reference data RF and reproduction data RP needs cooking step recognition. The processor PR performs real-time determination of the cooking step performed by the cook US, and compares the reproduction data RP with the reference data RF for each cooking step.

The processor PR analyzes the sensed time series data (the TTW information and the cooking video of the cooking object CO) and the recipe information input by the user, thereby specifying a timing at which an operation such as switching of heating power or input of ingredients has been performed. The processor PR takes these timings as boundaries of steps, and estimates the start/end timing of each step.

The processor PR specifies the start/end timing of each cooking step constituting the cooking process on the time axis, for each cooking data. Comparison between the reference data RF and the reproduction data RP is performed with a cooking step as a basic unit. That is, the start point of the time axis to be compared is the start time of the cooking step recognized for each cooking data. Using the sensor data and the recipe information, the processor PR determines a cooking step in progress. The processor PR aligns the start times of corresponding cooking steps so as to compare the reproduction data RP with the reference data RF .

### [4-1. Cooking step identification example 1]

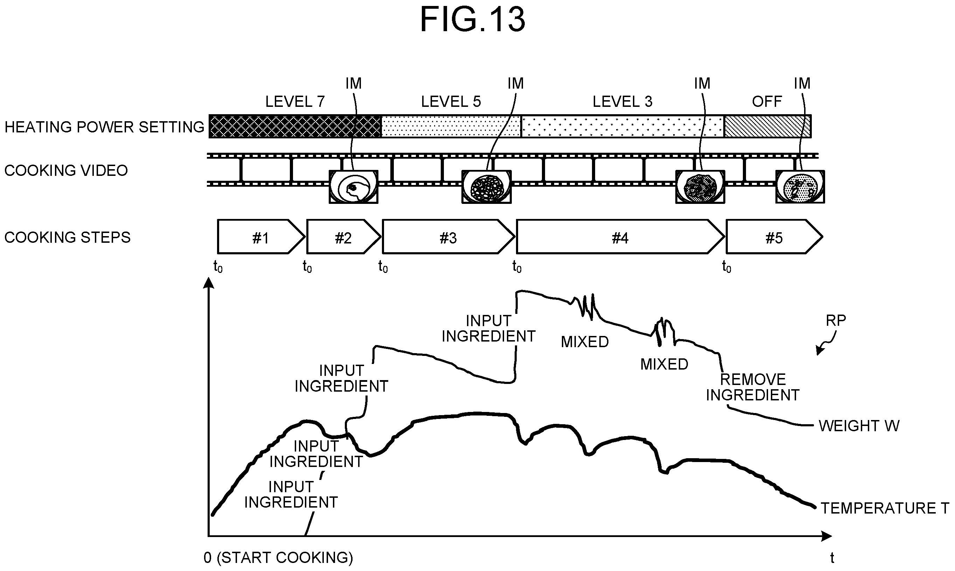

FIG. 13 is a diagram illustrating a cooking step identification example.

FIG. 13 illustrates the entire cooking process from the start of cooking to the end of cooking. The horizontal axis in FIG. 13 indicates the time from the start of cooking. The time series data corresponds to data items, for example, which are time series recordings of the cooking video VID obtained by capturing the inside of the pot PT with the camera sensor CM, the heating power of the IH heater HT, the temperature T measured with the temperature sensor TS, and the weight W measured with the weight sensor WS. The heating power of the IH heater HT is expressed by a level from level 1 to 7, for example. The larger the level, the larger the set value of the heating power. "OFF" represents a state in which heating is stopped.

The start/end time of each cooking step is specified based on the sensor data and the known information held by the cooking assistance system CS. The boundary of the cooking step recognized by the processor PR is defined as timings of execution of the following operations, for example. These operations do not necessarily determine the boundary of the cooking step, but are often to be effective division criteria.
· Switching of heating power
· Inputting ingredients into pot PT
· Removing ingredients from pot PT (including removal of impurities)
· Start/end of operations such as mixing of ingredients and pot shaking
· Remove pot PT itself, pot lid, and the like

The processor PR analyzes the sensed time series data (the TTW information and the cooking video of the cooking object CO) and the recipe information input by the user, thereby specifying a timing at which each operation has been performed. The processor PR takes these timings as boundaries of steps, and estimates the start/end timing of each step.

For example, the timing at which the heating power has been switched is accurately specified from the change in the heating power setting of a stove HT. Timings of all of the steps of inputting and removing the ingredient, placing and removing the pot and the pot lid, and the like, can be estimated by capturing a discontinuous change in the weight W. In a case where a large amount of ingredients are added with a large temperature difference from the food material in the pot, the tendency of discontinuous change rate of the temperature T is also a determination criterion. In a case of continuous occurrence of discontinuous changes in the weight W, it is possible to estimate that an operation of applying human force such as mixing ingredients is in progress. Furthermore, with high processing capability of the processor, the execution of each operation described above can be detected by object recognition or action recognition based on the cooking video VID, making it possible to increase the estimation accuracy. The processor PR estimates the timing of each operation using the reproduction data RP, and separates the cooking work for each cooking step. The processor PR estimates the timing of each operation using the reproduction data RP, and separates the cooking work for each cooking step.

### [4-2. Cooking step identification example 2]

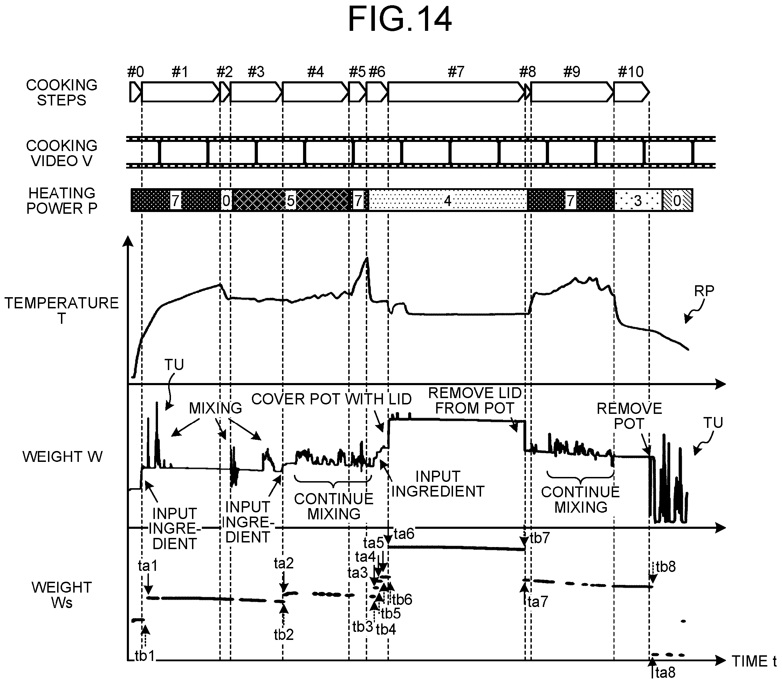

FIG. 14 is a diagram illustrating another identification example of the cooking step.

An example of a result of specifying the start/end time of each cooking step based on the sensor data and known information held by the cooking assistance system CS is illustrated as cooking steps #0 to #10 in FIG. 14. The boundaries of individual cooking steps are indicated by vertical dashed lines. The cooking step recognized by the processor PR is highly related to but does not necessarily match the cooking step described in recipes described for humans.

Hereinafter, a specific method of specifying the timing of each operation will be exemplified. Here, with the time denoted by t, each time series data will be described with the heating power denoted by P(t), the temperature denoted by T(t), the weight denoted by W(t), and the cooking video VID denoted by time series data V(t) formed with still images. Similarly to FIG. 13, the heating power is displayed as a level.

The timing at which the heating power is switched is accurately specified from the heating power P(t). The processor PR specifies the end times of the cooking steps #1, #2, #4, #5, #8, and #9 based on the switching timing of the heating power.

The processor PR removes disturbance noise from the weight W(t) to generate a weight Ws(t). As seen in the graph of the weight W, the disturbance noise indicates a fluctuation TU of the weight value caused by a factor that is not a weight change of the cooking object CO itself in the pot PT, such as mixing of ingredients or pot shaking. As an example, FIG. 14 illustrates an example of a graph of the weight Ws(t) obtained by removing noise from the weight W(t) by a simple calculation method. Only a probable value as the weight of the object to be heated remains in the weight Ws(t), and the removed portion is replaced with an invalid value. The invalid value portion of the weight Ws(t) is interpreted as a portion in which operations such as input of ingredients, mixing, and removal of a pot lid are performed.

The processor PR specifies a timing at which the weight Ws(t) changes greatly in a discontinuous manner. For example, a point indicated by an arrow in the graph of the weight Ws corresponds to this timing. In the graph, tbn(n = 1 to 8) indicated by a dashed arrow is a time in the vicinity of the earlier side of a discontinuous point, while tan(n = 1 to 8) indicated by a solid arrow is a time in the vicinity of the later side of the discontinuous point. The discontinuous point of the weight Ws(t) is a candidate for the timing at which input of ingredient into the pot PT is performed and removal of the pot PT itself, the pot lid, or the like is performed. For example, the end time of the cooking steps #0, #3, #6, #7, and #10 corresponds to this timing.

In order to further specify the timing of input of ingredients into the pot PT and the timing of removal of the pot PT itself, the pot lid, or the like, it is also effective to use the following information, for example.
· Quantity of ingredients and input procedure (included in recipe information set as cooking condition)
· Weight of kitchen utensil such as pot PT and pot lid that can be included in weight value (the information may be acquired by reference to a database from the specification information of the kitchen utensil set as the cooking condition, or may be measured in advance by the present system)
. Recognition information of the ingredient by image analysis on the cooking video V(t) (detecting the input of the ingredient into the pot PT and the cooking state)
· Recognition information of the kitchen utensil by image analysis on the cooking video V(t) (detecting presence/absence, arrangement, movement, etc., of the kitchen utensil)
· Human recognition information by image analysis on the cooking video V(t) (recognition of the action of the cook US)

These items of information can be implemented based on known information analysis technologies. In addition, the more abundant and reliable the information that can be used, the more accurately the operation performed can be specified. In the example of FIG. 14, it is determined that the ingredients are put in at the end of the cooking steps #0, #3, and #6, the pot lid is removed at the end of the cooking step #7, and the pot PT is removed from the stove at the end of the cooking step #10.

In the recording mode, the cooking step recognition can be executed by offline processing after the data of the entire cooking process is recorded, making it possible to obtain a relatively highly accurate result. In contrast, in the reproduction mode, the entire cooking process of the reference data RF is known, but data during cooking needs to be analyzed while being acquired in real time. In order to remove the disturbance noise and specify the operation details without delay, it is effective to perform image analysis of the cooking video V(t) in real time to perform advanced status recognition.

Each cooking step recognized by the above-described method is to be a unit on a time axis compared by the above-described information presentation method. For example, in the time series graphs GP of FIGS. 4 to 6, the origin t0 of the horizontal axis is defined as the start time of each cooking step, and the right end of the graph is defined as the end time of the same step. Also in the visualization example of FIGS. 7 and 9, the time range of the data to be calculated is determined using the cooking step as a basic unit. Even in cooking based on the same recipe, the length of each cooking step differs for each sample. Therefore, simply comparing by the elapsed time based on the cooking start time would accumulate the deviation together with progress of the cooking in some cases. In order to effectively compare the TTW information between different samples, it is important to use the timing having the same meaning as the cooking procedure, as a reference.

Although it is more convenient to be able to automatically process the recognition of the cooking step, the recognition can also be performed manually by the cook US. In this case, the work is similar to timeline editing (IN/OUT editing) in video editing applications. The cook US freely browses the cooking video VID captured by the camera sensor CM with a viewer, and visually identifies and marks the frames corresponding to the start position and the end position of each cooking step. This work may be performed by the input UI device IND, but can also be performed by any information terminal such as a personal computer (PC) or a tablet terminal.

Regarding the recognition of the cooking step of the recorded cooking data, the cook US visually edits the result of the automatic processing by the offline analysis and corrects the details, thereby making it possible to create high-quality data. In addition, also in the case of the real-time recognition in the reproduction mode, the cook US can confirm the automatically recognized result on the display DP and appropriately correct the result via the input UI device IND as necessary. For example, the example of FIG. 14 is a case where the cooking step #6 is further finely divided corresponding to the discontinuous point of weight Ws(t) automatically detected in the above-described processing method. In this regard, unnecessary boundaries can be removed by human visual editing, and divided steps can be integrated into one cooking step #6 in an appropriate time range.

### [5. Information presentation by music expression]

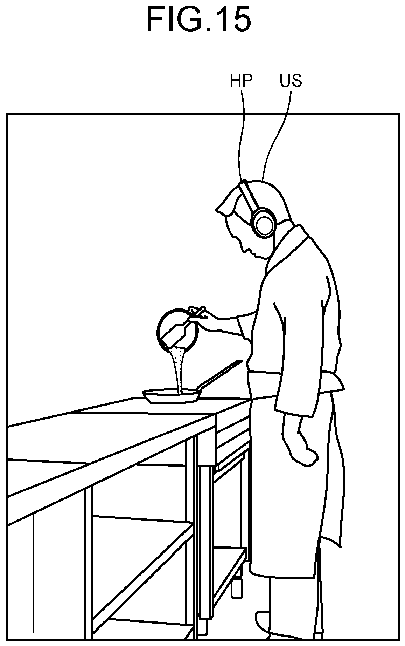

FIG. 15 is a diagram illustrating a presentation example of assistance information by music expression.

As described above, the display DP is any information presentation device capable of presenting information not limited to images. As one of specific examples to be described in particular, there is a method in which the display DP includes a speaker and a cooking state is expressed by music.

For example, the processor PR presents the reproduction data RP and the reference data RF as sound data that can be compared auditorily by the cook US. The processor PR associates a plurality of pieces of information included in the reproduction data RP with the pitch, the volume, and the rhythm, and expresses the deviation between the reproduction data RP and the reference data RF as a deviation in the pitch, the volume, and the rhythm.

The processor PR can reproduce the music by performing mapping to the change of the music parameter by which it is easy to intuitively recognize the deviation of the cooking state with respect to the reference data RF. In particular, as a method of expressing the difference in temperature, weight, and time as the basic data, by using a method of associating the difference in temperature with the difference in pitch, the difference in weight with the difference in volume, and the difference in time (timing) with the difference in rhythm, it is possible to obtain an expression intuitively understandable.

For example, the cook US listens to music generated by the processor PR through a headphones HP or the like. When there is no difference in temperature, weight, or time from the reference data RF, the music is reproduced according to the music score, and the cook US can enjoy the music comfortably. When there is a deviation from the reference data RF, the music is reproduced reflecting each deviation amount, giving the cook US an uncomfortable feeling. When the user becomes accustomed to the information presentation method, the user acquires a physical sensation of performing cooking operations so as to eliminate the uncomfortable feeling with respect to the reproduced music, and an operation of maintaining the comfortable music consequently achieves the reproduction of the cooking state.

In order to map the sensing data of the cooking state to the music parameter, the method described in Patent Literature 3 is applicable, for example.

### [6. Hardware configuration example]

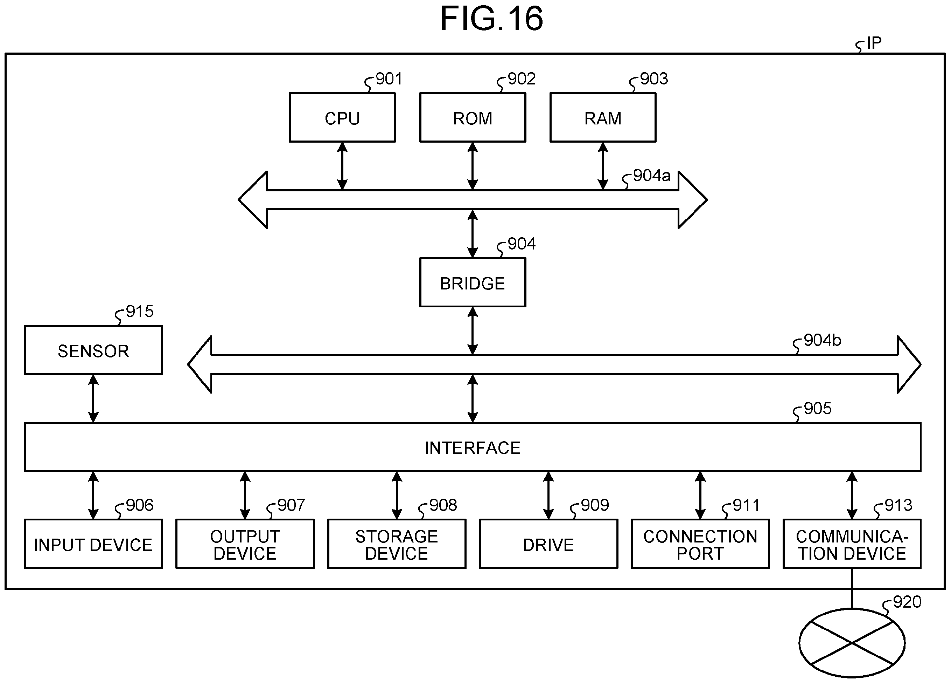

FIG. 16 is a diagram illustrating an example of a hardware configuration of the information processing device IP.

The information processing device IP includes a central processing unit (CPU) 901, read only memory (ROM) 902, random access memory (RAM) 903, and a host bus 904a. The information processing device IP further includes a bridge 904, an external bus 904b, an interface 905, an input device 906, an output device 907, a storage device 908, a drive 909, a connection port 911, a communication device 913, and a sensor 915. The information processing device IP may include a processing circuit such as a DSP or an ASIC instead of or in addition to the CPU 901.

The CPU 901 functions as an arithmetic processing device and a control device, and controls the overall operation of the cooking assistance system CS according to various programs. In addition, the CPU 901 may be a microprocessor. The ROM 902 stores programs and calculation parameters used by the CPU 901. The RAM 903 temporarily stores a program used in the execution of the CPU 901, parameters that change appropriately in the execution, or the like. The CPU 901 functions as the processor PR, for example.

The CPU 901, ROM 902, and RAM 903 are connected to each other by the host bus 904a including a CPU bus or the like. The host bus 904a is connected to the external bus 904b such as a Peripheral Component Interconnect/Interface (PCI) bus via the bridge 904. There is no need to separate the host bus 904a, the bridge 904, and the external bus 904b from each other, and these functions may be implemented on one bus.

The input device 906 is actualized by a device to which the user input information, such as a mouse, a keyboard, a touch panel, a button, a microphone, a switch, and a lever. Furthermore, the input device 906 may be, for example, a remote control device using infrared rays or other radio waves, or an externally connected device such as a mobile phone or a PDA that supports the operation of the information processing device IP. Furthermore, the input device 906 may include, for example, an input control circuit that generates an input signal based on the information input by the user using the above input means and outputs the input signal to the CPU 901. By operating the input device 906, the user of the information processing device IP can input various data to the information processing device IP and give an instruction on the processing operation. The input device 906 may form the input UI device IND, for example.

The output device 907 is formed by a device capable of visually or auditorily notifying the user of acquired information. Examples of such devices include display devices such as CRT display devices, liquid crystal display devices, plasma display devices, EL display devices, and lamps, audio output devices such as speakers and headphones, and printer devices. The output device 907 outputs the results obtained by various processing performed by the information processing device IP, for example. Specifically, the display device visually displays the results obtained by various processing performed by the information processing device IP in various formats such as texts, images, tables, and graphs. The audio output device converts an audio signal composed of reproduced audio data, acoustic data, or the like into an analog signal and output the signal auditorily. The output device 907 may form the display DP, for example.

The storage device 908 is a data storage device formed as an example of a storage unit of the information processing device IP. The storage device 908 is implemented by, for example, a magnetic storage device such as an HDD, a semiconductor storage device, an optical storage device, an optical magnetic storage device, or the like. The storage device 908 may include a storage medium, a recording device that records data on the storage medium, a reading device that reads data from the storage medium, a deleting device that deletes the data recorded on the storage medium, and the like. This storage device 908 stores programs executed by the CPU 901, various data, as well as various data acquired from the outside, and the like. The storage device 908 may form the storage ST, for example.

The drive 909 is a reader/writer for a storage medium, and is built in or externally connected to the information processing device IP. The drive 909 reads information recorded on a removable storage medium such as a mounted magnetic disk, optical disk, magneto-optical disk, or semiconductor memory, and outputs the read information to the RAM 903. The drive 909 can also write information to the removable storage medium.

The connection port 911 is an interface connected to an external device, and is a connecting port to an external device capable of transmitting data by, for example, a universal serial bus (USB).

The communication device 913 is, for example, a communication interface formed by a communication device or the like for connecting to a network 920. The communication device 913 is, for example, a communication card for wired or wireless Local Area Network (LAN), Long Term Evolution (LTE), Bluetooth (registered trademark), Wireless USB (WUSB), or the like. Furthermore, the communication device 913 may be a router for optical communication, an Asymmetric Digital Subscriber Line (ADSL) router, a modem for various communications, or the like. The communication device 913 can transmit and receive signals or the like to and from the Internet and other communication devices (such as the server SV) in accordance with a predetermined protocol such as TCP/IP.

The sensor 915 includes various types of sensors such as a temperature sensor, a weight sensor (force sensor), a camera sensor, a distance measuring sensor, an audio sensor, an acceleration sensor, a gyro sensor, and a geomagnetic sensor, for example. The sensor 915 acquires information regarding a cooking state of the cooking object CO, such as a heating temperature, a heating time, and a weight of the cooking object CO, as well as information regarding a surrounding environment of the information processing device IP, such as brightness and noise around the information processing device IP. The sensor 915 may form the sensor device SE, for example.

The network 920 is a wired or wireless transmission path for information transmitted from a device connected to the network 920. For example, the network 920 may include a public network such as the Internet, a telephone network, and a satellite communication network, or various local area networks (LANs) including Ethernet (registered trademark), wide area networks (WANs), or the like. Furthermore, the network 920 may include a dedicated network such as an Internet protocol-virtual private network (IP-VPN).

### [7. Effects]

The information processing device IP includes the processor PR. The processor PR presents the reproduction data RP indicating the cooking profile of the dish during cooking to the cook US in real time in a format that can be compared with the reference data RF. With the information processing method of the present disclosure, the processing of the information processing device is executed by a computer. A program of the present disclosure causes a computer to implement processing of the information processing device.

With this configuration, the degree of deviation of the reproduction data RP from the target reference data RF is recognized in real time. Correcting the deviation as needed by the cook US will enhance the reproduction degree of the finish of the dish.

The processor PR determines the cooking step performed by the cook US in real time. The processor PR compares the reproduction data RP with the reference data RF for each cooking step.

With this configuration, the cooking work is separated for each cooking step. The reproduction data RP of each cooking step is compared with the reference data RF of the corresponding cooking step. Therefore, even with a shift occurring in the progress of cooking, comparison between the reproduction data RP and the reference data RF is to be appropriately performed.

Using the sensor data and the recipe information, the processor PR determines a cooking step in progress.

With this configuration, the cooking step is accurately determined by applying the sensor data to the flow of cooking grasped from the recipe information.

The processor PR aligns start times of corresponding cooking steps so as to compare the reproduction data RP with the reference data RF.

With this configuration, it is easy to recognize the deviation between the reproduction data RP and the reference data RF.

The reference data RF includes a cooking video VID showing a cooking process. The processor PR extracts an image at the end of the cooking step from the cooking video VID as the reference image IMP to the cook US.

With this configuration, the target cooking state is recognized based on the reference image IMP. By referring to the reference image IMP, the cook US can bring the cooking state during cooking close to the target cooking state.

The reproduction data RP includes time series information regarding the heating temperature, the heating time, and the weight of a cooking object CO.

With this configuration, the cook US can adjust the cooking method as needed so as to bring the heating temperature, the heating time, and the weight of the cooking object CO close to the reference data RF. According to the examinations performed by the inventors, it is clear that performing cooking while finely adjusting these conditions so as to be close to the reference data RF will remarkably enhance the reproduction degree of the finish of the dish.

The processor PR presents the reproduction data RP and the reference data RF as the visualized data VD that can be visually compared by the cook US.

With this configuration, it is easy to visually recognize the deviation between the reproduction data RP and the reference data RF.

The processor PR expresses the deviation between the reproduction data RP and the reference data RF by a time series graph GP, a histogram HG, or a heat map DBM, for example.

With this configuration, the deviation between the reproduction data RP and the reference data RF is quantitatively grasped.

The processor PR presents the reproduction data RP and the reference data RF as sound data that can be compared auditorily by the cook US.

With this configuration, it is possible to recognize the deviation between the reproduction data RP and the reference data RF without shifting the gaze line from the cooking object CO.

The processor PR associates a plurality of pieces of information included in the reproduction data RP with a pitch, a volume, and a rhythm. The processor PR expresses the deviation between the reproduction data RP and the reference data RF as the deviation of the pitch, the volume, and the rhythm.

With this configuration, the deviation between the reproduction data RP and the reference data RF is intuitively grasped.

The effects described in the present specification are merely examples, and thus, there may be other effects, not limited to the exemplified effects.

### [Supplementary notes]

Note that the present technique can also have the following configurations.
(1) An information processing device comprising a processor that presents reproduction data indicating a cooking profile of a dish during cooking to a cook in real time in a format that can be compared with reference data.
(2) The information processing device according to (1),
   wherein the processor performs real-time determination of a cooking step performed by the cook, and compares the reproduction data with the reference data for each cooking step.
(3) The information processing device according to (2),
   wherein the processor determines the cooking step in progress by using sensor data and recipe information.
(4) The information processing device according to (2) or (3),
   wherein the processor aligns start times of corresponding cooking steps so as to compare the reproduction data with the reference data.
(5) The information processing device according to any one of (2) to (4),
   wherein the reference data includes a cooking video showing a cooking process, and
   the processor extracts a video at the end of the cooking step from the cooking video as a reference image to the cook.
(6) The information processing device according to any one of (1) to (5),
   wherein the reproduction data includes time series information regarding a heating temperature, a heating time, and a weight of a cooking object.
(7) The information processing device according to any one of (1) to (6),
   wherein the processor presents the reproduction data and the reference data as visualized data that can be visually compared by the cook.
(8) The information processing device according to (7),
   wherein the processor expresses a deviation between the reproduction data and the reference data by a time series graph, a histogram, or a heat map.
(9) The information processing device according to any one of (1) to (6),
   wherein the processor presents the reproduction data and the reference data as sound data that can be auditorily compared by the cook.
(10) The information processing device according to (9),
   wherein the processor associates a plurality of pieces of information included in the reproduction data with a pitch, a volume, and a rhythm, and expresses a deviation between the reproduction data and the reference data as a deviation in the pitch, the volume, and the rhythm.
(11) An information processing method to be executed by a computer, the method comprising presenting reproduction data indicating a cooking profile of a dish during cooking to a cook in real time in a format that can be compared with reference data.
(12) A program that causes a computer to implement processes comprising presenting reproduction data indicating a cooking profile of a dish during cooking to a cook in real time in a format that can be compared with reference data.

### Reference Signs List

- DBM: HEAT MAP
- GP: TIME SERIES GRAPH
- HG: HISTOGRAM
- IMP: REFERENCE IMAGE
- IP: INFORMATION PROCESSING DEVICE
- PR: PROCESSOR
- RF: REFERENCE DATA
- RP: REPRODUCTION DATA
- US: COOK
- VD: VISUALIZED DATA
- VID: COOKING VIDEO

## Claims

1. An information processing device comprising a processor that presents reproduction data indicating a cooking profile of a dish during cooking to a cook in real time in a format that can be compared with reference data.

2. The information processing device according to claim 1,
wherein the processor performs real-time determination of a cooking step performed by the cook, and compares the reproduction data with the reference data for each cooking step.

3. The information processing device according to claim 2,
wherein the processor determines the cooking step in progress by using sensor data and recipe information.

4. The information processing device according to claim 2,
wherein the processor aligns start times of corresponding cooking steps so as to compare the reproduction data with the reference data.

5. The information processing device according to claim 2,
wherein the reference data includes a cooking video showing a cooking process, and
the processor extracts a video at the end of the cooking step from the cooking video as a reference image to the cook.

6. The information processing device according to claim 1,
wherein the reproduction data includes time series information regarding a heating temperature, a heating time, and a weight of a cooking object.

7. The information processing device according to claim 1,
wherein the processor presents the reproduction data and the reference data as visualized data that can be visually compared by the cook.

8. The information processing device according to claim 7,
wherein the processor expresses a deviation between the reproduction data and the reference data by a time series graph, a histogram, or a heat map.

9. The information processing device according to claim 1,
wherein the processor presents the reproduction data and the reference data as sound data that can be auditorily compared by the cook.

10. The information processing device according to claim 9,
wherein the processor associates a plurality of pieces of information included in the reproduction data with a pitch, a volume, and a rhythm, and expresses a deviation between the reproduction data and the reference data as a deviation in the pitch, the volume, and the rhythm.

11. An information processing method to be executed by a computer, the method comprising presenting reproduction data indicating a cooking profile of a dish during cooking to a cook in real time in a format that can be compared with reference data.

12. A program that causes a computer to implement processes comprising presenting reproduction data indicating a cooking profile of a dish during cooking to a cook in real time in a format that can be compared with reference data.
